(19) Europäisches Patentamt
European Patent Office
Office européen des brevets

(11) **EP 4 184 399 A1**

(12) **EUROPÄISCHE PATENTANMELDUNG**

(43) Veröffentlichungstag:
**24.05.2023 Patentblatt 2023/21**

(21) Anmeldenummer: **21209837.0**

(22) Anmeldetag: **23.11.2021**

(51) Internationale Patentklassifikation (IPC):
***G06N 20/00*** (2019.01)

(52) Gemeinsame Patentklassifikation (CPC):
**G06N 20/00**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Die Erfindernennung liegt noch nicht vor**

(74) Vertreter: **Siemens Patent Attorneys**
**Postfach 22 16 34**
**80506 München (DE)**

(54) **COMPUTER-IMPLEMENTIERTES VERFAHREN ZUM BETRIEB EINES TECHNISCHEN GERÄTS MIT EINEM MODELL**

(57) Computer-implementiertes Verfahren zum Betrieb eines technischen Geräts mit einem Modell, wobei folgende Schritte ausgeführt werden:
a) Erfassen von Klienten (C1-Cn) mit einem jeweiligen technischen Gerät,
b) Gruppierung (GROUP) der Klienten (C1-Cn) in eine erste Gruppe (GS) und eine zweite Gruppe (GF) durch Vergleich mit einem jeweils vorbestimmten Wertebereichen für die jeweilige Gruppe (GS, GF),
c) Trainieren (TRAIN) eines ersten Gruppen-Modells für die erste Gruppe (GS) und Bereitstellen (UPDATE) des ersten Gruppen-Modells an einen Server,
d) Trainieren (TRAIN) eines zweiten Gruppen-Modells für die zweite Gruppe (GF) und Bereitstellen (UPDATE) des zweiten Gruppen-Modells an den Server,
e) Empfangen und Aggregieren (S-AGGR) des ersten und des zweiten Gruppen-Modells durch den Server und Bilden eines globalen Modells mit globalen Modell-Parametern aus dem ersten und zweiten Gruppen-Modell,
f) Übermitteln des globalen Modells an einen Klienten und Betreiben des technischen Geräts mit dem globalen Modell,
wobei im Schritt a) auch die Latenz der Klienten (C1-Cn) erfasst wird und die Gruppierung der Klienten im Schritt b) anhand ihrer jeweiligen Latenz erfolgt.

FIG 1

EP 4 184 399 A1

**Beschreibung**

Die Erfindung betrifft ein computer-implementiertes Verfahren und ein System zum Betrieb eines technischen Geräts mit einem Modell.

Ferner betrifft die Erfindung ein Computerprogramm, einen elektronisch lesbaren Datenträger und ein Datenträgersignal.

Maschinelles Lernen (kurz ML) wird heutzutage häufig in industriellen Anwendungen eingesetzt.

Beispielsweise kann Maschinelles Lernen für Objekt-Klassifizierung zur Identifizierung einer Nut in einer Halbleiterscheibe in einem metallischen Werkstück angewandt werden, um abzuschätzen, ob die Nut korrekt platziert ist.

Maschinelles Lernen kann auch zur BetriebszustandsÜberwachung eingesetzt werden, um beispielsweise festzustellen, ob eine Pumpe läuft oder sich im Stillstand befindet.

Ebenfalls kann ML zur Anomalie-Erkennung eingesetzt werden.

Da mehrere Produktionsstandorte möglicherweise dieselbe ML-Anwendung benötigen, wie die Überwachung eines Pumpenzustands, kann das Trainieren eines Modells, welches auf gesammelten Daten aller verfügbaren Pumpen basiert, auch wenn diese an verschiedenen Standorten gelegen sind, insgesamt zu einem besseren ML-Modell führen.

Die gemeinsame Nutzung von Daten zwischen Kunden ist jedoch aufgrund von Datenschutzbedenken oder der Datenmenge nicht immer möglich.

Daher kann föderiertes Lernen (FL) verwendet werden, um Wissen zwischen mehreren Clients zu aggregieren und ein Modell zwischen ihnen zu trainieren, ohne Daten auszutauschen.

Die Klienten können jedoch unterschiedliche Latenzen in ihrer Kommunikation oder Rechenvorrichtung aufweisen, durch welche sie miteinander oder mit einem Server verbunden sind.

Dies kann sowohl beim Training eines ML-Modells zu unerwünschten Effekten führen, insbesondere dann, wenn die Latenz Stunden oder gar Tage beträgt, beispielsweise durch eine temporäre Trennung der Verbindung.

Im Stand der Technik wird "synchrones FL" verwendet, um Wissen zwischen Clients zu aggregieren, aber Clients mit höheren Latenzen von Stunden oder Tagen können die Trainingszeit unerwünscht verlängern.

Alternativ kann das Verwerfen langsamer Klienten im FL die Trainingszeit zwar verbessern, jedoch auch die Leistung verschlechtern, da die verworfenen Klienten möglicherweise mehr positiv zu einem genauen Modell beitragen können.

Latenzbewusste FL-Algorithmen können Klienten mit demselben Latenzprofil vor dem Training gruppieren. In vielen Fällen ändern sich die Latenzbedingungen jedoch dynamisch während des Trainings und erfordern einen automatischen Auslöser, um zu erkennen, wann eine Neugruppierung durchgeführt werden sollte.

Darüber hinaus kann das Gruppieren von Klienten unabhängig von ihrer Datenverteilung bei einer non-iid-Datenverteilung (engl. "independent and identically distributed"), bei der jeder Klient unterschiedliche Daten haben könnte, nicht optimal funktionieren.

Es ist Aufgabe der Erfindung eine Lösung für Anwendungen bereitzustellen, welche auf föderiertem Lernen beruhen, welche insbesondere die Latenz zwischen Klienten oder Servern berücksichtigt und dadurch sowohl die Trainingszeit als auch die Eigenschaften des ML-Modells verbessert und zu schnelleren und genaueren ML-Modellen für Klienten führt beziehungsweise deren Erzeugung vereinfacht, die dadurch jeweils einen besseren Beitrag zu einem gemeinsamen Modell liefern können.

Die erfindungsgemäße Aufgabe wird durch ein Verfahren eingangs genannter Art gelöst, indem folgende Schritte ausgeführt werden:

a) Erfassen von Klienten mit einem jeweiligen technischen Gerät,
b) Gruppierung der Klienten in eine erste Gruppe und zumindest eine zweite Gruppe durch Vergleich mit einem jeweils vorbestimmten Wertebereichen für die jeweilige Gruppe,
c) Trainieren eines ersten Gruppen-Modells für die erste Gruppe durch zumindest einen Klienten, welcher der ersten Gruppe zugeordnet ist, und Bereitstellen des ersten Gruppen-Modells an einen Server,
d) Trainieren eines zweiten Gruppen-Modells für die zumindest eine zweite Gruppe durch zumindest einen Klienten, welcher der zumindest einen zweiten Gruppe zugeordnet ist, und Bereitstellen des zweiten Gruppen-Modells an den Server,
e) Empfangen und Aggregieren des ersten und des zweiten Gruppen-Modells durch den Server und Bilden eines globalen Modells mit globalen Modell-Parametern aus dem ersten und zweiten Gruppen-Modell,
f) Übermitteln des globalen Modells an einen Klienten und Betreiben des technischen Geräts mit dem globalen Modell,

wobei im Schritt a) auch die Latenz der Klienten erfasst wird und die Gruppierung der Klienten im Schritt b) anhand ihrer jeweiligen Latenz erfolgt.

Latenzbewusstes föderiertes Lernen gemäß der Erfindung, welches Klienten basierend auf ihrer Latenz und optional auch ihrem Beitrag unter Berücksichtigung der Datenverteilung der Klienten adaptiv gruppiert, kann sowohl die Leistung als auch die Trainingszeit verbessern.

ML-/ FL-Modelle können beispielsweise durch Modell-Parameter dargestellt und übertragen werden.

Es ist günstig, wenn drei, vier, fünf oder zehn Gruppen und Gruppen-Modelle angewandt werden, um besonders sensitiv Latenz-Unterschiede einzelnen Klienten berücksichtigen zu können, insbesondere wenn zusätzlich eine Gewichtung einzelner Klienten berücksichtigt werden soll.

Klienten mit einer non-iid-Datenverteilung können bei der Aggregation zu einer Genauigkeits-Reduktion des FL-Modells führen. Dies kann dadurch verbessert werden, dass ähnliche Klienten in einer gemeinsamen Gruppe zusammengefasst werden, was zu einem positiven Wissens-Transfer zwischen den Klienten und somit zu einer Verbesserung der Genauigkeit führen kann.

In einer Weiterbildung der Erfindung ist es vorgesehen, dass der Schritt b) und die Schritte c) und/oder d) wiederholt werden und das jeweilige Gruppen-Modell erneut bestimmt wird, und die Schritte e) und f) erneut ausgeführt werden.

Dadurch wird eine dynamische Gruppierung erreicht, welches vorteilhaft dazu führt, dass das globale Modell stets aktuell und daher besonders genau ist, insbesondere in speziellen Betriebs-Situationen.

Dies ist insbesondere deshalb günstig, da damit auch sichergestellt wird, dass Klienten der richtigen, also ähnlichsten Gruppe zugeordnet sind und nicht aufgrund einer temporären ungünstigen Situation auf Dauer in einer ungünstigen Gruppe sind.

Ein solcher ungünstiger temporärer Einfluss kann beispielsweise dann vorliegen, wenn kurzzeitig der Prozessor des Klienten mit einer rechenintensiven Nebenaufgabe beschäftigt ist, welche während dieser Dauer ein schlechteres Latenzverhalten für das FL-Training hervorruft.

Ferner kann die Situation auftreten, dass einige Klienten mehr zu einem Modell beitragen und somit die Genauigkeit verbessern. Es ist demnach vorteilhaft, wenn diese Klienten auch stärker für andere FL-Trainings herangezogen werden, um deren Modelle ebenso zu verbessern.

Demnach verbessert eine dynamische Gruppierung, welche auf Latenz und Beitragsprofilen von Klienten aufbaut, während des Trainings die Modell-Genauigkeit und sorgt für optimale Trainingszeiten.

In einer Weiterbildung der Erfindung ist es vorgesehen, dass die Wiederholung der Schritte b) bis d) in einem vorbestimmten Zeitintervall erfolgt, beispielsweise nach 30 Minuten.

Dadurch wird eine besonders einfache Ausführung einer dynamischen Gruppierung erreicht.

In einer Weiterbildung der Erfindung ist es vorgesehen, dass die Wiederholung der Schritte b) bis d) nach einer vorbestimmten Anzahl an Kommunikationen für das Empfangen im Schritt e) zwischen einem Klienten und dem Server erfolgt, beispielsweise nach 20 Kommunikations-Runden.

Dadurch wird eine zusätzliche Variante für eine besonders einfache Ausführung einer dynamischen Gruppierung erreicht.

In einer Weiterbildung der Erfindung ist es vorgesehen, dass die Wiederholung der Schritte b) bis d) nach Überschreiten eines vorbestimmten Schwellwerts für die Latenz eines Klienten erfolgt.

Dadurch wird eine zusätzliche Variante für eine besonders reaktionsschnelle Ausführung einer dynamischen Gruppierung erreicht.

In einer Weiterbildung der Erfindung ist es vorgesehen, dass die Wiederholung der Schritte b) bis d) erfolgt, wenn festgestellt wird, dass sich die Modell-Genauigkeit des ersten und/oder zweiten Gruppen-Modells gegenüber der Modell-Genauigkeit des globalen Modells verringert.

Dadurch wird für eine dynamische Gruppierung erreicht, dass beispielsweise fehlerhafte Daten schnell erkannt werden können und dadurch rasch eine ungünstige Beeinflussung des Modells verhindert werden kann.

Die Modell-Genauigkeit kann beispielsweise durch Anwendung einer Verwirrungs-Matrix bestimmt werden, in welcher vorhergesagte Werte mit aktuellen Werten verglichen werden.

In einer Weiterbildung der Erfindung ist es vorgesehen, dass die vorbestimmten Wertebereiche für die jeweilige Gruppe erneut festgelegt werden und die Schritte a) bis f) erneut ausgeführt werden.

Dadurch wird eine besonders einfache Ausführung einer dynamischen Gruppierung erreicht, indem eine Wertebereichs-Anpassung durchgeführt wird, beispielsweise anhand eines neu ermittelten Bereichsmittelwerts.

In einer Weiterbildung der Erfindung ist es vorgesehen, dass die Gruppierung im Schritt b) erfolgt, indem ferner ein vorbestimmter Beitragsfaktor s für jeden Klienten berücksichtigt wird, welcher eine Gewichtung des Beitrags eines jeweiligen Klienten für eine Gruppe beschreibt, welcher vorzugsweise durch den Zusammenhang bestimmt wird:

$$s_G = \frac{1}{N_{K_G}} \sum_{\{k \in K_G\}} \alpha \cdot \frac{1}{L_k} + \beta \cdot b_k$$

mit

$\alpha, \beta$    Trainings-Hyper-Parameter

$K_G$    Klienten-Gruppe

$N_{KG}$    Anzahl an Klienten innerhalb einer Gruppe

$L_k$    Latenz eines Klienten

$b_k$    Beitrag eines Klienten

Ein Hyperparameter ist ein Parameter, dessen Wert zur Steuerung des Lernprozesses verwendet wird, während die Werte anderer Parameter durch Training abgeleitet werden.

Dadurch kann erreicht werden, dass zusätzlich zur Latenz eine Gewichtung einzelner Klienten berücksichtigt wird, um beispielsweise besonders signifikante oder vertrauenswürde Klienten stärker in die Modellerzeugung einzubinden.

Die Kombination von Latenzverhalten und Beitragsfaktor von Klienten kann zu besonders guten Modell-Eigenschaften führen.

Die Bestimmung des Beitragsfaktors s kann beispielsweise nach jeder Kommunikations-Runde erfolgen. Dabei kann eine Gruppe ausgewählt werden, beispielsweise aufgrund der Wahrscheinlichkeitsverteilung des Beitragsfaktors s.

Jede Gruppe kann daher einen Beitragsfaktors s aufweisen, welcher auf einer Wahrscheinlichkeitsverteilung beruht und welcher die Latenz mit dem Beitrag verbindet.

Somit lassen sich Gruppen mit niedriger Latenz und einem höheren Beitrag mit einem höheren Beitragsfaktor s kennzeichnen.

Die Wahrscheinlichkeitsverteilung kann durch folgenden Zusammenhang bestimmt werden:

$$prob_G = \frac{s_G}{\sum_{\{g \in G\}} s_g}$$

Dadurch entspricht die Wahrscheinlichkeitsverteilung des Beitragsfaktors s die Wahrscheinlichkeit für alle Gruppen. Durch Abtastung der Wahrscheinlichkeitsverteilung werden Gruppen mit schnelleren Klienten, also mit niedrigerer Latenz, und höherem Modell-Beitrag mit einer höheren Wahrscheinlichkeit ausgewählt. Dies ist vorteilhaft, da ein schnelleres FL-Training mit gleichzeitig genauem Modell angestrebt wird.

In einer Weiterbildung der Erfindung ist es vorgesehen, dass die Latenz der Klienten ein Latenz-Profil für den jeweiligen Klienten umfasst, welches zumindest zwei Latenz-Werte für unterschiedliche Betriebszustände des mit dem Klienten oder des verbundenen technischen Geräts beinhaltet.

Durch ein Latenz-Profil können mehrere Latenz-Werte für einen Klienten oder verbundene Geräte herangezogen werden, wodurch die Genauigkeit für das Modell verbessert werden kann.

Wenn sich eine Latenz das Latenz-Profil eines Klienten während des Trainings ändert, beispielsweise wenn der Klient eine neue Aufgabe erhält, welche dessen Rechenleistung unerwünscht ungünstig beeinflusst, oder wenn ein Klient nicht weiter verfügbar ist, so müssen die Prognosen und Schätzungen der Gruppen angepasst und korrigiert werden.

Durch eine günstige Wahl für die Kriterien zur Gruppen-Zuordnung, welche auf jeweiligen Latenzen und Beiträgen von Klienten beruhen, können beispielsweise dazu führen, dass schnelle Klienten mit hohen Modell-Genauigkeitsverteilungen mehr zum FL-Modell beitragen.

In weiterer Folge können Klienten, nämlich auch jene, die nichts zu einem globalen Modell beitragen, ein genaues Modell abrufen und anwenden.

Dies ist insbesondere dann sinnvoll, wenn beispielsweise neue Klienten in Betrieb genommen werden, für welche noch keinen eigenen Trainingsdaten zur Verfügung stehen.

Durch das genannte Verfahren können bereits nach wendigen Kommunikations-Runden Ergebnisse abgerufen werden, da bereits schnelle Klienten, die in das föderierte Lernen eingebunden sind, hinreichende Beiträge zum globalen Modell geliefert haben.

Die erfindungsgemäße Aufgabe wird auch durch ein System eingangs genannter Art gelöst, umfassend Klienten mit jeweils einer Klienten-Prozessor und jeweils einem Klienten-Speicher und jeweils einem verbundenen technischen Gerät, einer Kontroll-Vorrichtung mit einem Kontroll-Prozessor und einem Kontroll-Speicher und einem Server, wobei das erfindungsgemäße Verfahren ausgeführt wird.

Die erfindungsgemäße Aufgabe wird auch durch ein Computerprogramm gelöst, umfassend Befehle, welche bei deren Ausführung durch einen Computer diesen veranlassen, das erfindungsgemäße Verfahren auszuführen.

Die erfindungsgemäße Aufgabe wird auch durch einen elektronisch lesbaren Datenträger mit darauf gespeicherten lesbaren Steuerinformationen gelöst, welche zumindest das erfindungsgemäße Computerprogramm umfassen und derart ausgestaltet sind, dass sie bei Verwendung des Datenträgers in einer Rechenrichtung das erfindungsgemäße Verfahren durchführen.

Die erfindungsgemäße Aufgabe wird auch durch ein Datenträgersignal gelöst, welches das erfindungsgemäße Computerprogramm überträgt.

Die Erfindung wird nachfolgend anhand eines in den beigeschlossenen Zeichnungen dargestellten Ausführungsbeispiels näher erläutert. In den Zeichnungen zeigt:

Fig. 1    ein Fluss-Diagramm für ein Ausführungsbeispiel der Erfindung,

Fig. 2    ein Ausführungsbeispiel für das erfindungsgemäße Verfahren.

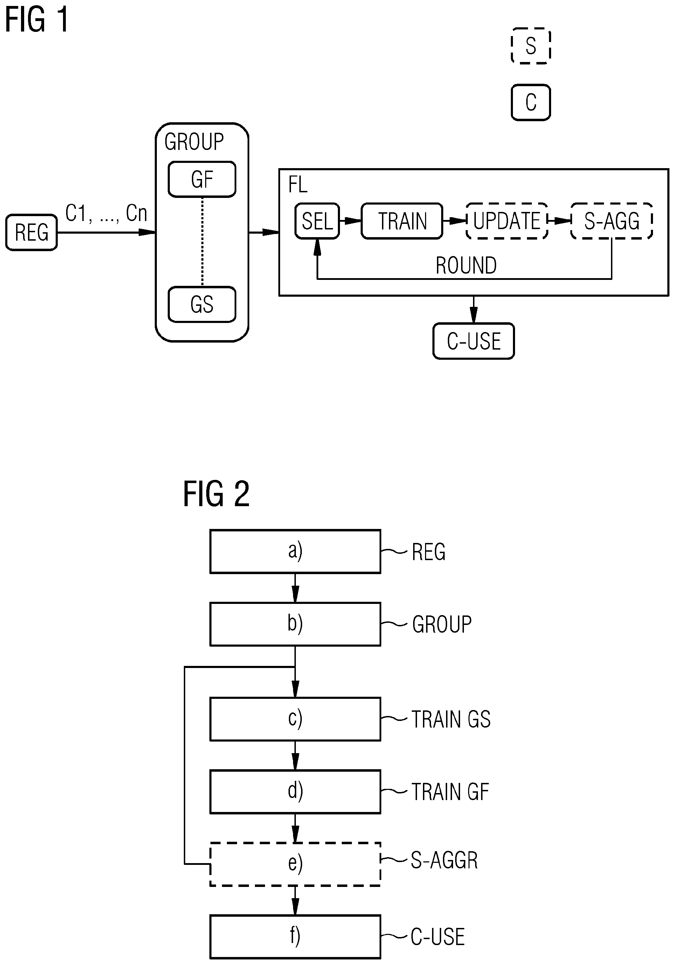

**Fig. 1** zeigt ein Ausführungsbeispiel der Erfindung für ein computer-implementiertes Verfahren, bei welchem mehrere FL-Klienten an einem gemeinsamen, föderierten Lernen FL teilnehmen, zu einem gemeinsamen Modell beitragen und dieses gemeinsame Modell verbessern.

Das Verfahren dient zum Betrieb eines technischen Geräts mit einem besonders genauen Modell.

In der Figur strichliert umrahme Verfahrens-Schritte werden von einem Server S ausgeführt, durchzogen umrahmte Verfahrens-Schritte werden von einem Klienten C ausgeführt.

Durch den vorgeschlagenen Ansatz ist das Training des Modells nicht auf einen eigenen Datensatz eines einzelnen Klienten beschränkt, sondern das Modell kann auch von anderen Klienten profitieren, ohne dabei die eigenen Daten direkt zu teilen. Mit anderen Worten wird die Privatsphäre weiterhin geschützt.

Zunächst registrieren sich die Klienten C1-Cn in einem Registrierungsschritt REG zur Teilnahme im föderierten Lernen FL von Klienten.

Der Server übermittelt den Klienten C1-Cn ein gespeichertes globales Modell aus vorhergehenden Trainings. Das föderierte Lernen weist mehrere Kommunikations-Runden auf, das heißt es wird iterativ ein neues globales Modell erzeugt, welches wiederum an die Klienten verteilt wird und dort erneut vom jeweiligen Klienten mit eigenen Trainingsdaten trainiert wird, und dem Server zur Aggregation mithilfe der Modell-Parameter, wie Gewichte in einem neuralen Netzwerk, zur Verfügung gestellt wird. Der Server empfängt von allen Klienten die Daten, aggregiert diese und aktualisiert das globale Modell dementsprechend.

Um unter Klienten mit unterschiedlicher Latenz effizient zu föderieren, erhält ein Klient vor dem FL-Training eine kleine Aufgabe, in welcher Latenz-Profile bestimmt werden. Anfänglich werden diese nur aufgrund ihrer Latenz schnellen und langsamen Gruppen zugeordnet, wobei jede Gruppe eine maximale Latenzzeit beziehungsweise einen Latenz-Wertebereich aufweist.

Nach jeder Kommunikations- bzw. Iterations-Runde wird eine Gruppe ausgewählt und es erfolgt eine Aggregation der Klienten innerhalb dieser ausgewählten Gruppe. Der Server erfasst Modell-Aktualisierungen innerhalb einer vordefinierten Wartezeit für die Gruppe. Falls ein Klient nicht wie vorgesehen reagiert, beispielsweise durch eine unterbrochene Verbindung, wird der Klient nicht berücksichtigt.

Dann erfolgt eine Gruppierung GROUP der registrierten Klienten in eine Gruppe schneller Klienten GF und einer Gruppe langsamer Klienten GS, wobei ein schneller Klient mit gleichartigen Klienten anhand von zugehörigen Latenzwerten innerhalb von vorgegebenen Bereichsgrenzen gruppiert wird. Dementsprechend wird ein langsamer Klient in eine andere Gruppe mit anderen vorgegebenen Bereichsgrenzen gruppiert. Es ist klar, dass es weitere Klienten-Gruppen mit ähnlichen Latenzwerten geben kann.

Anschließend erfolgt das föderierte Lernen FL.

Es erfolgt dabei eine Auswahl SEL einer Latenz-Gruppe und ein individuelles Trainieren TRAIN eines ML-Modells innerhalb einer Latenz-Gruppe GF, GS durch den zugeordneten Klienten.

Der zugeordnete Klient stellt die lokalen Modell-Parameter des erzeugten ML-Modells dem Server in einem Parameter-Aktualisierungs-Schritt UPDATE zur weiteren Bearbeitung zur Verfügung.

Aus den vom Klienten empfangenen lokalen Parametern aggregiert der Server in einem Schritt S-AGGR die lokalen Parameter in ein globales Modell mit globalen Modell-Parametern.

Falls notwendig, wird diese Ermittlung von globalen ML-Parametern in weiteren Runden ROUND zur Parameter-Aktualisierung wiederholt und das globale Modell mit globalen Modell-Parametern erneut bestimmt.

Bei Bedarf lädt nun ein Klient das globale aggregierte ML-Modell zur weiteren Verwendung beim Betrieb eines technischen Geräts herunter, um beispielsweise optimale Wartungsintervalle zu prognostizieren.

Zusammengefasst werden folgende Schritte ausgeführt:

a) Erfassen von Klienten C1-Cn mit einem jeweiligen technischen Gerät, sowie der Latenz der Klienten C1-Cn,

b) Gruppierung GROUP der Klienten C1-Cn anhand ihrer jeweiligen Latenz in eine erste Gruppe GS und eine zweite Gruppe GF durch Vergleich mit einem jeweils vorbestimmten Wertebereichen für die jeweilige Gruppe GS, GF,

c) Trainieren TRAIN eines ersten Gruppen-Modells für die erste Gruppe GS durch zumindest einen Klienten, welcher der ersten Gruppe GS zugeordnet ist, und Bereitstellen UPDATE des ersten Gruppen-Modells an einen Server,

d) Trainieren TRAIN eines zweiten Gruppen-Modells für die zweite Gruppe GF durch zumindest einen Klienten, welcher der zweiten Gruppe GF zugeordnet ist, und Bereitstellen UPDATE des zweiten Gruppen-Modells an den Server,

e) Empfangen und Aggregieren S-AGGR des ersten und des zweiten Gruppen-Modells durch den Server und Bilden eines globalen Modells mit globalen Modell-Parametern aus dem ersten und zweiten Gruppen-Modell,

f) Übermitteln des globalen Modells an einen Klienten und Betreiben des technischen Geräts mit dem globalen Modell.

Der Schritt b) und die Schritte c) und/oder d) können optional wiederholt werden, wobei dann das jeweilige Gruppen-Modell erneut bestimmt wird, und die Schritte e) und f) erneut ausgeführt werden.

Die Wiederholung der Schritte b) bis d) kann beispielsweise in einem vorbestimmten Zeitintervall erfolgen.

Alternativ kann die Wiederholung der Schritte b) bis d) beispielweise nach einer vorbestimmten Anzahl an Kommunikationen für das Empfangen im Schritt e) zwischen einem Klienten und dem Server erfolgen.

Die Wiederholung der Schritte b) bis d) kann beispielweise auch nach Überschreiten eines vorbestimmten Schwellwerts für die Latenz eines Klienten erfolgen.

Die Wiederholung der Schritte b) bis d) kann beispielweise auch erfolgen, wenn festgestellt wird, dass sich die Modell-Genauigkeit des ersten und/oder zweiten Gruppen-Modells gegenüber der Modell-Genauigkeit des globalen Modells verringert.

Die Modell-Genauigkeit kann beispielsweise dadurch festgestellt werden, indem durch das FL-Modell vorhergesagte Ausgabewerte mit realen Ausgabewerten des technischen Geräts eines Klienten verglichen werden.

Die vorbestimmten Wertebereiche für die erste und zweite Gruppe GS, GF können beispielweise dynamisch erneut festgelegt werden und die Schritte a) bis f) erneut ausgeführt werden.

Die Gruppierung im Schritt b) kann beispielweise erfolgen, indem ferner ein vorbestimmter Beitragsfaktor s für jeden Klienten berücksichtigt wird, welcher eine Gewichtung des Beitrags eines jeweiligen Klienten für eine Gruppe beschreibt, welcher vorzugsweise durch den Zusammenhang bestimmt wird:

$$s_G = \frac{1}{N_{K_G}} \sum_{\{K \in G_K\}} \alpha \cdot \frac{1}{L_K} + \beta \cdot b_K$$

mit

$\alpha, \beta$     Trainings-Hyper-Parameter

$K_G$     Klienten-Gruppe

$N_{KG}$     Anzahl an Klienten innerhalb einer Gruppe

$L_K$     Latenz eines Klienten

$b_K$     Beitrag eines Klienten

Die Latenz der Klienten (C1-Cn) kann beispielsweise ein Latenz-Profil für den jeweiligen Klienten (C1-Cn) umfassen, welches zumindest zwei Latenz-Werte für unterschiedliche Betriebszustände des mit dem Klienten oder des verbundenen technischen Geräts beinhaltet.

Das technische Gerät eines Klienten kann mithilfe eines ML-Modells betrieben werden, indem beispielsweise Wartungsintervalle durch Anwendung des ML-Modells prognostiziert werden.

Es ist klar, dass die verwendeten Modelle für die technischen Geräte der Klienten nur dann gemeinsam aggregiert werden können, wenn die Geräte einander entsprechen, also baugleich sind.

**Fig. 2** zeigt ein Ausführungsbeispiel für das erfindungsgemäße Verfahren in Form eines Flussdiagramms.

Die Erläuterungen der vorhergehenden Figur gelten gleichermaßen für die dargestellten Verfahrens-Schritte.

**Bezugszeichenliste:**

| | |
|---|---|
| C, C1-Cn | Klient |
| C-USE | Verwendung von Modell-Parametern im Klienten |
| FL | Föderiertes Lernen |
| GF | Gruppe schneller Klienten |
| GROUP | Gruppierung |
| GS | Gruppe langsamer Klienten |
| REG | Registrierung von Klienten |
| ROUND | Aktualisierungs-Runde |
| S | Server |
| S-AGG | Aggregierung von Modell-Parametern im Server |
| SEL | Auswahl einer Latenz-Gruppe |
| TRAIN | Trainieren eines ML-Modells |
| UPDATE | Parameter-Aktualisierung |

**Patentansprüche**

1. Computer-implementiertes Verfahren zum Betrieb eines technischen Geräts mit einem Modell, wobei folgende Schritte ausgeführt werden:

    a) Erfassen von Klienten (C1-Cn) mit einem jeweiligen technischen Gerät,
    b) Gruppierung (GROUP) der Klienten (C1-Cn) in eine erste Gruppe (GS) und zumindest eine zweite Gruppe (GF) durch Vergleich mit einem jeweils vorbestimmten Wertebereichen für die jeweilige Gruppe (GS, GF),
    c) Trainieren (TRAIN) eines ersten Gruppen-Modells für die erste Gruppe (GS) durch zumindest einen Klienten, welcher der ersten Gruppe (GS) zugeordnet ist, und Bereitstellen (UPDATE) des ersten Gruppen-Modells an einen Server,
    d) Trainieren (TRAIN) eines zweiten Gruppen-Modells für die zumindest eine zweite Gruppe (GF) durch zumindest einen Klienten, welcher der zumindest einen zweiten Gruppe (GF) zugeordnet ist, und Bereitstellen (UPDATE) des zweiten Gruppen-Modells an den Server,
    e) Empfangen und Aggregieren (S-AGGR) des ersten und des zweiten Gruppen-Modells durch den Server und Bilden eines globalen Modells mit globalen Modell-Parametern aus dem ersten und zweiten Gruppen-Modell,
    f) Übermitteln des globalen Modells an einen Klienten und Betreiben des technischen Geräts mit dem globalen Modell,

wobei im Schritt a) auch die Latenz der Klienten (C1-Cn) erfasst wird und die Gruppierung der Klienten im Schritt b) anhand ihrer jeweiligen Latenz erfolgt.

2. Verfahren nach dem vorhergehenden Anspruch, wobei der Schritt b) und die Schritte c) und/oder d) wiederholt werden und das jeweilige Gruppen-Modell erneut bestimmt wird, und die Schritte e) und f) erneut ausgeführt werden.

3. Verfahren nach Anspruch 2, wobei die Wiederholung der Schritte b) bis d) in einem vorbestimmten Zeitintervall erfolgt.

4. Verfahren nach Anspruch 2, wobei die Wiederholung der Schritte b) bis d) nach einer vorbestimmten Anzahl an Kommunikationen für das Empfangen im Schritt e) zwischen einem Klienten und dem Server erfolgt.

5. Verfahren nach Anspruch 2, wobei die Wiederholung der Schritte b) bis d) nach Überschreiten eines vorbestimmten Schwellwerts für die Latenz eines Klienten erfolgt.

6. Verfahren nach dem vorhergehenden Anspruch, wobei die Wiederholung der Schritte b) bis d) erfolgt, wenn festgestellt wird, dass sich die Modell-Genauigkeit des ersten und/oder zweiten Gruppen-Modells gegenüber der Modell-Genauigkeit des globalen Modells verringert.

7. Verfahren nach einem der vorhergehenden Ansprüche, wobei die vorbestimmten Wertebereiche für die jeweilige Gruppe (GS, GF) erneut festgelegt werden und die Schritte a) bis f) erneut ausgeführt werden.

8. Verfahren nach einem der vorhergehenden Ansprüche, wobei die Gruppierung im Schritt b) erfolgt, indem ferner ein vorbestimmter Beitragsfaktor s für jeden Klienten berücksichtigt wird, welcher eine Gewichtung des Beitrags eines jeweiligen Klienten für eine Gruppe beschreibt, welcher vorzugsweise durch den Zusammenhang bestimmt wird:

$$s_G = \frac{1}{N_{K_G}} \sum_{\{K \in G_K\}} \alpha \cdot \frac{1}{L_K} + \beta \cdot b_K$$

mit

$\alpha, \beta$ Trainings-Hyper-Parameter
$K_G$ Klienten-Gruppe
$N_{KG}$ Anzahl an Klienten innerhalb einer Gruppe
$L_K$ Latenz eines Klienten
$b_K$ Beitrag eines Klienten

9. Verfahren nach einem der vorhergehenden Ansprüche, wobei die Latenz der Klienten (C1-Cn) ein Latenz-Profil für den jeweiligen Klienten (C1-Cn) umfasst, welches zumindest zwei Latenz-Werte für unterschiedliche Betriebszustände des mit dem Klienten oder des verbundenen technischen Geräts beinhaltet.

10. System zum Betrieb eines technischen Geräts mit einem Modell, umfassend Klienten mit jeweils einer Klienten-Prozessor und jeweils einem Klienten-Speicher und jeweils einem verbundenen technischen Gerät, einer Kontroll-Vorrichtung mit einem Kontroll-Prozessor und einem Kontroll-Speicher und einem Server, **dadurch gekennzeichnet, dass** das Verfahren nach einem der vorhergehenden Ansprüche ausgeführt wird.

11. Computerprogramm, umfassend Befehle, welche bei deren Ausführung durch einen Computer diesen veranlassen, das Verfahren nach einem der Ansprüche 1 bis 10 auszuführen.

12. Elektronisch lesbarer Datenträger mit darauf gespeicherten lesbaren Steuerinformationen, welche zumindest das Computerprogramm nach dem vorhergehenden Anspruch umfassen und derart ausgestaltet sind, dass sie bei Verwendung des Datenträgers in einer Recheneinrichtung das Verfahren nach einem der Ansprüche 1 bis 10 durchführen.

13. Datenträgersignal, welches das Computerprogramm nach Anspruch 12 überträgt.

## FIG 1

S

C

GROUP

GF

REG  C1, ..., Cn

GS

FL

SEL → TRAIN → UPDATE → S-AGG

ROUND

C-USE

## FIG 2

a) — REG

b) — GROUP

c) — TRAIN GS

d) — TRAIN GF

e) — S-AGGR

f) — C-USE

## EUROPÄISCHER RECHERCHENBERICHT

Nummer der Anmeldung

EP 21 20 9837

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CHAI ZHENG ET AL: "FedAT : a high-performance and communication-efficient federated learning system with asynchronous tiers", ARXIV.ORG, 29. August 2021 (2021-08-29), Seiten 1-16, XP055921917, * das ganze Dokument * ----- | 1-13 | INV. G06N20/00 |
| X | CHAI ZHENG: "TiFL: A Tier-based Federated Learning System", PROCEEDINGS OF THE 29TH INTERNATIONAL SYMPOSIUM ON HIGH-PERFORMANCE PARALLEL AND DISTRIBUTED COMPUTING, ACMPUB27, NEW YORK, NY, USA, 23. Juni 2020 (2020-06-23), Seiten 125-136, XP058460367, DOI: 10.1145/3369583.3392686 ISBN: 978-1-4503-7052-3 * das ganze Dokument * ----- | 1-13 | |
| A | ZHANG YU ET AL: "CSAFL: A Clustered Semi-Asynchronous Federated Learning Framework", 2021 INTERNATIONAL JOINT CONFERENCE ON NEURAL NETWORKS (IJCNN), IEEE, 18. Juli 2021 (2021-07-18), Seiten 1-10, XP033975120, DOI: 10.1109/IJCNN52387.2021.9533794 [gefunden am 2021-09-08] * das ganze Dokument * ----- -/-- | 1-13 | RECHERCHIERTE SACHGEBIETE (IPC) G06N |

Der vorliegende Recherchenbericht wurde für alle Patentansprüche erstellt

| Recherchenort | Abschlußdatum der Recherche | Prüfer |
|---|---|---|
| Den Haag | 23. Mai 2022 | Moro Pérez, Gonzalo |

EPO FORM 1503 03.82 (P04C03)

Seite 1 von 2

Europäisches
Patentamt

European
Patent Office

Office européen
des brevets

## EUROPÄISCHER RECHERCHENBERICHT

**Nummer der Anmeldung**

EP 21 20 9837

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | THOMAS HIESSL ET AL: "Industrial Federated Learning -- Requirements and System Design", ARXIV.ORG, CORNELL UNIVERSITY LIBRARY, 201 OLIN LIBRARY CORNELL UNIVERSITY ITHACA, NY 14853, 14. Mai 2020 (2020-05-14), XP081673589, * das ganze Dokument * ----- | 1-13 | |
| A | Bonawitz Keith ET AL: "Towards Federated Learning at Scale: System Design", , 22. März 2019 (2019-03-22), XP055778083, Gefunden im Internet: URL:https://arxiv.org/pdf/1902.01046.pdf [gefunden am 2021-02-19] * das ganze Dokument * ----- | 1-13 | |
| A | AVISHEK GHOSH ET AL: "An Efficient Framework for Clustered Federated Learning", ARXIV.ORG, CORNELL UNIVERSITY LIBRARY, 201 OLIN LIBRARY CORNELL UNIVERSITY ITHACA, NY 14853, 8. Juni 2021 (2021-06-08), XP081975313, * das ganze Dokument * ----- | 1-13 | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 23. Mai 2022 | Moro Pérez, Gonzalo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**Seite 2 von 2**